# FASCICULE DE BREVET EUROPEEN

(11) **EP 3 025 137 B1**
(45) Date de publication et mention de la délivrance du brevet: **20.03.2019**
(21) Numéro de dépôt: 14737245.2
(22) Date de dépôt: 09.07.2014
(51) Int. Cl.: G01M 17/02, G01M 3/04, B29D 30/00, B29D 30/06

(54) **METHODE DE TEST DE LA RESISTANCE A UNE PERTE DE PRESSION D'UN PNEUMATIQUE**
VERFAHREN ZUM TESTEN DER BESTÄNDIGKEIT EINES REIFENS GEGEN DRUCKVERLUST
METHOD FOR TESTING THE RESISTANCE OF A TIRE TO A PRESSURE LOSS

(30) Priorité: 23.07.2013 FR 1357225
(43) Date de publication de la demande: 01.06.2016
(73) Titulaire: Compagnie Générale des Etablissements Michelin, 63000 Clermont-Ferrand (FR)
(72) Inventeur: CAREME, Christopher, F-63040 Clermont-Ferrand Cedex 9 (FR)
(74) Mandataire: Dequire, Philippe Jean-Marie Denis
(86) Numéro de dépôt international: PCT/EP2014/064679
(87) Numéro de publication internationale: WO 2015/010899

(56) Documents cités:
- EP-A1- 1 457 308
- EP-A1- 1 944 176
- WO-A1-99/62998
- FR-A1- 2 318 042
- US-A- 2 756 801
- US-A- 3 903 947
- US-A- 3 952 787
- US-A- 4 116 895

## Description

### Domaine de l'invention

La présente invention est relative aux pneumatiques, et plus particulièrement à une méthode de test de la résistance à une perte de pression consécutive à une perforation d'un pneumatique.

### État de la technique

Lors d'une perforation de la paroi d'un pneumatique par un objet perforant tel une vis ou un clou, ou « crevaison », l'air de gonflage du pneumatique peut s'échapper par la perforation et la perte de pression consécutive entraîner une mise à plat du pneumatique et un arrêt du véhicule.

Le délai entre la perforation et la mise à plat du pneumatique est très variable, en fonction notamment de la taille de l'objet perforant mais aussi de la poursuite ou non du roulage avec l'objet perforant en place dans la paroi du pneumatique. Ce roulage entraîne des mouvements relatifs entre l'objet perforant et la paroi du pneumatique ce qui agrandit souvent la perforation et accélère le débit de fuite.

Pour résoudre ce problème des crevaisons qui date du début même de l'utilisation des roues chaussées de pneumatiques gonflés, la solution usuelle est de s'arrêter et de remplacer la roue concernée par une roue de secours.

D'autres solutions ont été imaginées et sont disponibles sur le marché pour éviter d'avoir à utiliser une roue de secours.

Le document US 5 916 931 présente un récipient aérosol comportant une émulsion aqueuse de latex mélangée avec différents produits dont des produits fibreux et un gaz propulseur. En cas de pneumatique à plat, ce récipient est prévu pour être fixé à la valve du pneumatique et pour envoyer dans la cavité interne du pneumatique le gaz propulseur et l'émulsion d'obturation / réparation. Le pneumatique est alors regonflé au moins partiellement, l'émulsion colmate la perforation et on peut recommencer à rouler, à vitesse réduite d'abord pour bien répartir l'émulsion sur toute la surface interne du pneumatique puis normalement.

Il existe aussi des kits de réparation, proposés par certains constructeurs automobiles en lieu et place d'une roue de secours. Cela a pour intérêt de réduire le poids de la voiture, donc sa consommation de carburant et de libérer de l'espace sous le plancher du coffre.

Le kit de crevaison se compose d'un compresseur, d'une bouteille de produit d'étanchéité, d'un câble de raccordement électrique et d'un flexible d'air. Une fois la bouteille de produit fixée sur le compresseur, le flexible d'air vissé sur la bouteille et sur la valve du pneumatique et le câble électrique branché sur l'allume cigares du véhicule, il n'y a plus qu'à mettre l'interrupteur du compresseur sur « on », tout en laissant tourner le moteur pour ne pas décharger la batterie.

Le produit d'étanchéité se vide dans le pneumatique en environ 30 secondes pendant lesquelles la pression dans le flexible d'air va monter jusqu'à environ 6 bars. Ensuite, l'air gonflera le pneumatique et la pression de gonflage théorique sera atteinte dans les 10 minutes. Une fois la pression atteinte, il n'y a plus qu'à éteindre le compresseur et démonter le kit.

Une fois le pneumatique regonflé, il faut prendre rapidement le volant, parcourir 10 km et vérifier la pression du pneumatique à l'aide du compresseur et du flexible d'air pour la porter au niveau requis.

Une fois le pneumatique crevé réparé, il convient de ne pas dépasser les 80 km/h et de faire contrôler ou changer son pneumatique rapidement. Le kit de réparation des pneumatiques n'est qu'une réparation temporaire.

Les manufacturiers de pneumatiques ont aussi proposé des pneumatiques pourvus sur leur paroi intérieure ou dans leur structure d'une couche de produits élastiques, visqueux ou pâteux, appelés « produits auto-obturants », permettant une obturation des perforations. Le document WO 2008/080556 A1 présente un exemple d'un tel pneumatique. Ces pneumatiques ne sont pas en tant que tel increvables, mais les perforations sont normalement refermées ou obturées par le produit auto-obturant.

Le document EP1944176 propose de tester l'efficacité d'un produit auto-obturant en perforant par des clous des pneumatiques puis par des roulages sur véhicules à des vitesses et sur des distances variables. A la fin de chaque phase du test, on vérifie l'absence de fuites par la mesure de la pression de gonflage.

Le document US2756801 propose un test séquentiel d'un pneumatique équipé d'un produit obturant en le perforant avec un clou, en le faisant rouler dans des conditions données, puis en retirant le clou. Le test reproduit plusieurs fois cette séquence. La présence d'une fuite est appréciée par des mesures de pression de gonflage du pneumatique.

Le document US4116895 divulgue un test statique avec perforation puis retrait d'une pluralité de clous ainsi qu'un test dynamique à vitesse rapide jusqu'à éjection des clous. La présence de fuites est appréciée par la pression de gonflage.

Le document WO 99/62998 divulgue aussi un test statique avec perforation et contrôle de la pression avant et après retrait de clous. Un test dynamique est proposé par rlulage sur une voiture puis contrôle de la pression de gonflage des pnematiques avant et après retrait des clous restants.

Le document FR2318042 propose un test dynamique dans lequel on fait rouler un pneumatique avec des clous en place pendant 15 mn, puis on retire les clous et on continue le roulage pendant 8 heures ou jusqu'à une perte notable de pression de gonflage. Après retrait des cous, on analyse chaque perforation avec une solution savonneuse pour observer si une fuite existe.

Le document EP1457308 propose un test dans lequel on insère 24 clous de plusieurs dimensions dans la paroi d'un pneumatique, puis on vérifie la présence de fuites par l'évolution de la pression de gonflage en statique après retrait de la moitié des clous et en dynamique avec les 12 clous restants. Le test est arrêté en cas de perte notable de pression.

Le document US3903947 divulgue aussi des tests statique et dynamique similaires.

Le document US3952787 propose un test statique similaire et un test dynamique dans lequel la vitesse de roulage est augmentée jusqu'à ejection du clou perforant le pneumatique. La présence d'une fuite est appréciée par la mesure de la pression de gonflage.

Les fabricants de ces différentes solutions présentent tous des résultats remarquables d'obturation des perforations grâce à leurs produits, notamment lors d'une perforation suivie d'un retrait immédiat de l'objet perforant. Mais, aucune méthode de test correspondant aux conditions usuelles de roulage n'existe et ainsi il est très difficile de connaître l'efficacité réelle de ces différentes solutions et de les comparer entre elles.

### Description brève de l'invention

L'invention a pour objet une méthode de test de la résistance d'un pneumatique à une perte de pression consécutive à une perforation, caractérisée en ce qu'elle comporte les étapes suivantes :
- créer dans la paroi du pneumatique une pluralité de perforations en insérant à travers la paroi une pluralité d'objets perforants ;
- faire rouler le pneumatique comportant les objets perforants sur une distance donnée avec une pression de gonflage régulée ;
- arrêter le roulage ; et
- déterminer pour chaque perforation un indice de résistance à la perte de pression basé sur une estimation du débit de fuite de la perforation ;
et en ce que :
- dans une première phase, la pluralité d'objets perforants se compose d'objets effilés et à parois lisses tels des clous et le roulage est effectué de telle sorte que les objets ne sont pas éjectés pendant le roulage ; et
- dans une deuxième phase, la pluralité d'objets perforants se compose d'objets effilés mais à parois comportant un filet tels des vis et le roulage est effectué à des vitesses inférieures à 80 km/h.

Cette méthode de test a l'avantage d'être très sélective en raison du roulage effectué en présence d'une pluralité d'objets perforants. Ce roulage entraîne des déplacements relatifs des objets perforants et de la paroi du pneumatique qui peuvent élargir les perforations et rendre beaucoup plus difficile leur obturation ou le maintien de leur obturation. L'utilisation d'une pluralité d'objets perforants de types et de diamètres variés couplé à un roulage à pression régulée permet avec un seul pneumatique d'obtenir de nombreux résultats de résistance à la perforation et donc de limiter le nombre d'essais nécessaires. Il est avantageux de réguler la pression de gonflage du pneumatique testé pour compenser des fuites éventuelles susceptibles d'apparaître pendant le roulage, particulièrement en cas d'éjection d'objet perforant. Cela permet d'étudier la performance des perforations liées aux autres objets perforants présents dans le pneumatique.

Cette méthode de test est particulièrement utile pour les pneumatiques comportant un produit auto-obturant, par exemple une couche de produit auto-obturant disposée sur sa paroi intérieure ou dans sa paroi.

Lorsque le pneumatique ne comporte pas de produit auto-obturant, à l'arrêt du roulage et avant de déterminer l'indice de résistance à la perte de pression, on met en place dans la cavité interne du pneumatique un produit d'obturation.

Cette méthode de test permet donc de tester dans des conditions réalistes toutes les solutions de remplacement d'une roue de secours en cas de crevaison, et notamment les bombes anti-crevaison et les kits de réparation. Bien entendu, cette mise en place d'un produit d'obturation à l'intérieur de la cavité interne du pneumatique est à effectuer en suivant le mode opératoire propre à chaque solution d'obturation testée.

La méthode de test selon un objet de l'invention comporte plusieurs phases, chaque phase utilisant des types différents d'objets perforants ainsi que des conditions de test adaptées.

Les demanderesses ont en effet constaté que la performance d'un produit auto-obturant ou d'une couche de produit auto-obturant peut être différente en fonction de la forme des objets obturants.

On constate que lorsque les objets perforants sont des objets effilés à paroi lisse tels des clous, la performance est constante à faible vitesse puis diminue progressivement à partir d'un certain seuil de vitesse. La première phase de la méthode de test avec de tels clous comme objets perforants a l'avantage de tester la performance de résistance à la perforation à une vitesse suffisante pour que le test soit sélectif mais insuffisante pour entrainer une éjection notable des objets perforants. De préférence, la vitesse de roulage V₁ pour cette première phase est fixe et supérieure à 80 km/h, très préférentiellement comprise entre 90 et 120 km/h.

En dessous de 80 km/h, la méthode de test ne permet pas de classer des solutions de produit auto-obturant proches et au-delà de 120 km/h, la proportion de clous éjectés devient trop importante.

En effet, on a constaté que la performance d'un produit auto-obturant ou d'une couche auto-obturante après éjection de l'objet perforant, et particulièrement des clous, est très aléatoire. Il n'est pas donc pas possible d'avoir un test sélectif et reproductible en présence de nombreuses éjections des objets perforants.

La méthode de test comporte une deuxième phase dans laquelle la pluralité d'objets perforants se compose d'objets effilés et à parois comportant un filet, tels des vis.

On constate que la performance d'auto-obturation en présence de tels objets perforants est moins bonne à l'arrêt et à basse vitesse mais évolue positivement en fonction de la vitesse à laquelle le roulage est effectué.

En présence de tels objets perforants de type vis, on constate qu'un préchauffage du pneumatique entre 50 et 60 degrés Celsius au moment de l'insertion de ces objets améliore la performance avant le roulage et aussi après roulage. Avantageusement, un tel préchauffage peut faire partie de cette deuxième phase dans la mesure où on se rapproche des conditions d'usage : la majorité des cas de crevaisons interviennent lorsque le pneumatique est en cours de roulage, donc chaud.

Le roulage de la deuxième phase est de préférence effectué à une vitesse inférieure à 80 km/h. Cela permet de différencier nettement le comportement de différentes solutions anti-obturantes en présence de perforations dans le sommet du pneumatique dues à des vis. Avantageusement, la vitesse de roulage V₂ est comprise entre 50 et 75 km/h.

Avantageusement, on complète cette deuxième phase de la méthode de test en réalisant un test avec des objets perforants de type vis et à vitesse fixe plus élevée V₂₋₂, supérieure à 80 km/h.

Cela permet d'apprécier pour chaque solution la pente de l'amélioration de la performance anti-obturation en fonction de la vitesse.

La méthode de test ainsi décrite permet d'apprécier la résistance à la perte de pression d'une solution auto-obturante dans deux cas complémentaires d'objets perforants. On constate que les classements des solutions sont indépendants les uns des autres dans ces deux cas.

Avantageusement, la méthode de test comporte en outre une troisième phase avec les étapes suivantes :
- créer dans la paroi dudit pneumatique une pluralité de perforations en insérant à travers ladite paroi une pluralité d'objets perforants ;
- extraire de la paroi dudit pneumatique la pluralité d'objets perforants ;
- faire rouler le pneumatique après extraction des objets perforants à une vitesse V₃ supérieure à 120 km/h sur une distance donnée avec une pression de gonflage régulée ;
- arrêter le roulage ; et
- déterminer pour chaque perforation un indice de résistance à la perte de pression basé sur une estimation du débit de fuite de ladite perforation.

De préférence, la vitesse V₃ est fixe et inférieure à 180 km/h.

Cette troisième phase a l'avantage de caractériser la performance d'une solution auto-obturante dans un troisième cas de figure indépendant des deux premiers déjà décrits. Il s'agit de tester la résistance mécanique à vitesse élevée des bouchons de produit auto-obturant qui comblent les perforations après que l'objet perforant ait été extrait. Les résultats de cette troisième phase sont complémentaires de ceux des deux premières.

La distance de roulage pour chacune des phases de la méthode de test est avantageusement supérieure à 200 km et très avantageusement supérieure à 500 km.

Bien entendu, en fonction des circonstances et du nombre d'objets perforants utilisés pour chaque phase, on peut utiliser un même pneumatique pour les trois phases de la méthode de test ou plusieurs pneumatiques, chacun équipé d'une même solution auto-obturante, pour tester cette solution auto-obturante.

Avantageusement, la méthode de test comporte une étape complémentaire de calcul pour chaque phase d'un indice de résistance à la perte de pression moyen (I_{M1}, I_{M2}, I_{M3}) pour l'ensemble des perforations.

Il est aussi avantageux de déterminer chaque indice en combinant les notations des objets perforants et en les pondérant avec une courbe de fréquence d'apparition des objets en clientèle.

On peut par exemple se référer à la courbe de distribution des diamètres des clous et/ou des vis observés dans un pays donné. Cela permet de se rapprocher des conditions réelles d'usage dans un pays donné.

Les trois indices ainsi obtenus I_{M1}, I_{M2}, I_{M3} permettent de caractériser de façon très sélective la résistance à la perte de pression consécutive à une perforation d'un pneumatique, que ce pneumatique soit équipé dès l'origine d'un produit auto-obturant ou non.

Le roulage du pneumatique peut être effectué sur un volant.

De préférence, le pneumatique est gonflé avant d'insérer les objets perforants à travers sa paroi. Cela facilite l'insertion des objets perforants.

Pendant le roulage, la pression de gonflage du pneumatique est de préférence régulée et très préférentiellement régulée à une pression comprise entre 1,8 et 5 bars selon le type de pneumatique testé.

Avantageusement la pluralité d'objets perforants comprend des vis et des clous de diamètres et/ou de longueurs variés.

Le diamètre des objets perforants est de préférence de 3 à 5 mm.

Avantageusement, la pluralité d'objets perforants comporte de 10 à 50 objets perforants, préférentiellement entre 20 et 40.

Les objets perforants peuvent être insérés dans le sommet du pneumatique à partir de la surface extérieure des sillons de sculpture du pneumatique.

Ils peuvent aussi être insérés dans les motifs de sculpture du pneumatique.

Avantageusement, on utilise un agent tensio-actif pour visualiser et apprécier qualitativement le débit de fuite de chaque perforation.

On peut utiliser le barème suivant pour apprécier le débit de fuite d'une perforation :
- 100 : aucune bulle n'est visible, pas de fuite ;
- 80 : nano-fuite, de très petites bulles de diamètre inférieur à 0,1 mm, visibles seulement à la loupe ;
- 60 : micro-fuite, petites bulles visibles à l'oeil nu, de diamètre compris entre 0,1 et 1 mm;
- 0 : fuite, bulles évolutives de diamètre supérieur à 1 mm, ou pas de bulle en raison d'un débit d'air trop important.

### Description des Figures

Les figures annexées illustrent différents aspects de la méthode de test de la résistance à une perte de pression d'un pneumatique dans le cas d'un pneumatique comportant une couche auto-obturante sur sa paroi intérieure :
- la figure 1 présente quelques objets perforants ;
- la figure 2 est une courbe, en fréquence cumulée, de la distribution des diamètres de clous observée en Chine et aux États-Unis ;
- la figure 3 est une vue de dessus partielle d'un sommet de pneumatique comportant trois perforations ;
- la figure 4 illustre le cas d'une perforation avec débit de fuite nul ;
- les figures 5 (a) et (b) illustrent le cas d'une perforation avec très faible débit de fuite ;
- la figure 6 illustre les cas d'une perforation avec faible débit de fuite ;
- les figures 7 (a) et (b) illustrent les cas d'une perforation avec fuite rapide ; et
- la figure 8 présente schématiquement l'influence de la vitesse de roulage sur la performance d'une solution auto-obturante.

### Description détaillée de l'invention

On teste un pneumatique 1 de dimension 205/55 R 16 Michelin Energy Saver pourvu d'une couche de produit auto-obturant telle que présentée dans la demande WO 2008/080556 A1 précitée.

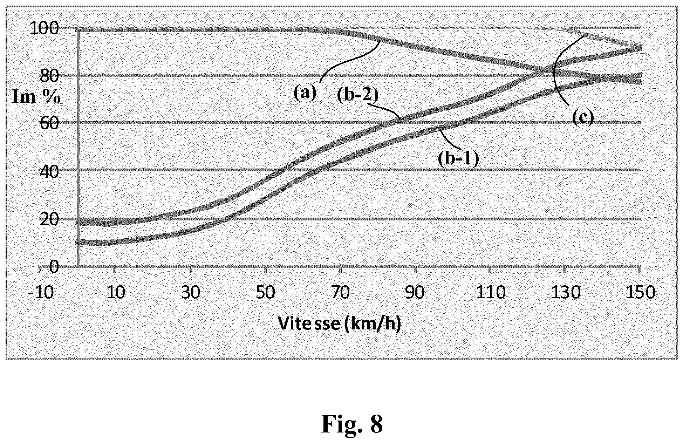

La figure 8 présente très schématiquement l'influence de la vitesse de roulage sur la performance d'une solution auto-obturante donnée. Les conditions de roulage sont celles des différentes phases de la méthode de test selon un objet de l'invention.

Le graphe (a) montre le cas d'objets perforants de type clous, objets effilés dont la paroi latérale est lisse (phase 1). La performance est excellente à basse vitesse de roulage mais diminue ensuite progressivement avec la vitesse au-delà d'une vitesse de l'ordre de 70 km/h.

Le graphe (b-1) illustre le cas d'objets perforants de type vis, objets effilés dont la paroi latérale comporte un filet (phase 2). Les vis sont insérées dans le sommet du pneumatique à froid, c'est-à-dire à température ambiante, de l'ordre de 20 degrés Celsius. La performance n'est pas bonne à l'arrêt et à basse vitesse mais ensuite s'améliore progressivement avec celle-ci.

Le graphe (b-2) illustre le cas d'objets perforants de type vis, lorsque l'insertion des objets perforants de type vis est effectuée à chaud, c'es-à-dire lorsque le pneumatique a été amené à une température du sommet de l'ordre de 50 à 60 degrés Celsius. On constate une amélioration de la performance de résistance à une perte de pression, amélioration qui est sensible sur toute la gamme de vitesses du test.

Enfin, le graphe (c) illustre la performance obtenue lors d'un roulage effectué après extraction des objets perforants immédiatement après leur mise en place dans le sommet du pneumatique (phase 3). On retrouve une excellente performance à faible vitesse et c'est seulement au-delà d'une vitesse élevée de l'ordre de 130 km/h que la performance moyenne peut commencer à décroitre. Cela caractérise la résistance mécanique à haute température des bouchons de produit auto-obturant.

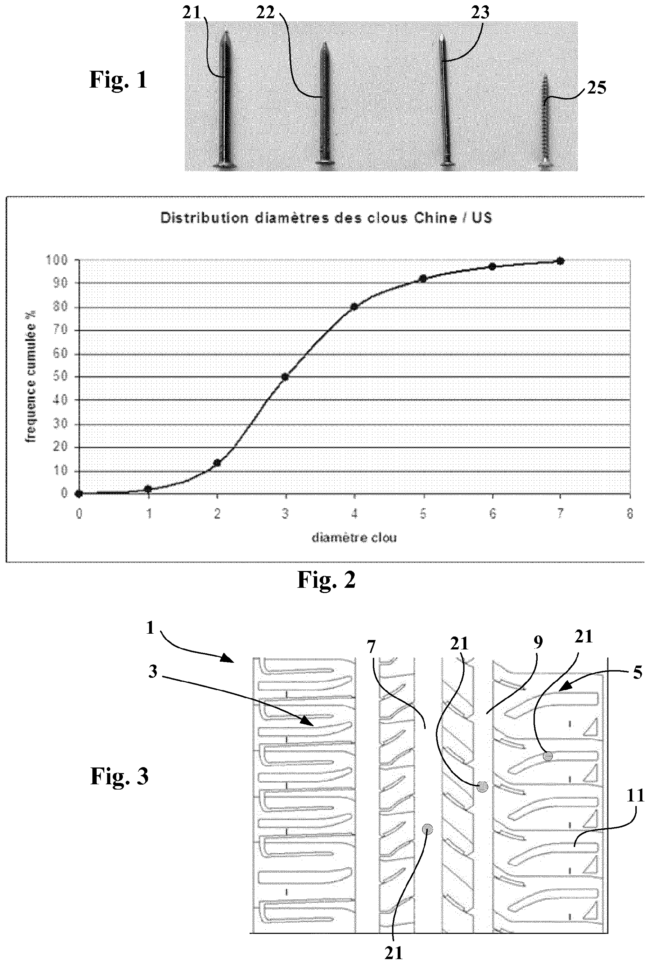

La figure 1 présente quelques exemples d'objets perforants couramment utilisés pour la méthode de test. Il s'agit de clous 21 de diamètre 3 mm, de clous 22 de diamètre 4 mm et de clous 23 de diamètre 5 mm ainsi que de vis 25 de diamètre 3,5 mm, de longueur 30 ou 40 mm.

Les diamètres de ces objets perforants sont tout à fait réalistes des objets perforants rencontrés dans des conditions réelles de roulage. La figure 2 présente en fréquence cumulée la distribution des clous observés sur des routes en Chine et aux États-Unis. On constate que l'ensemble des clous de diamètres inférieurs ou égaux à 5 mm correspond à plus de 90 % des objets rencontrés.

Après avoir monté le pneumatique 1 sur une roue appropriée et l'avoir gonflé à 2,5 bars, on attache rigidement le pneumatique et la roue sur un moyeu rotatif non représenté et on insère à travers le sommet 3 du pneumatique 1 une pluralité d'objets perforants.

La figure 3 présente en vue de dessus partielle le sommet 3 d'un pneumatique 1. La sculpture de ce pneumatique comporte trois sillons longitudinaux, intérieur, central 7 et extérieur 9 ainsi qu'une épaule extérieure 5 avec un ensemble de sillons ou creux transversaux 11. Par intérieur ou extérieur, on se réfère au côté du pneumatique destiné à être monté vers l'intérieur du véhicule ou vers l'extérieur du véhicule, la sculpture de ce pneumatique étant asymétrique. A la figure 3, on voit trois perforations par des clous 21 disposées dans le sillon longitudinal central 7 (SC), le sillon longitudinal extérieur 9 (SE) et dans le creux transversal (CT) 11 de l'épaule extérieure 5.

Pour la première phase de la méthode de test ou « protocole clous », on a inséré sur l'ensemble du sommet douze clous de diamètre 3 mm et de longueur comprise entre 45 et 60 mm, six clous de diamètre 4 mm et de longueur similaire et six clous de diamètre 5 mm et de longueur similaire.

Pour la seconde phase de la méthode de test ou « protocole vis », après avoir amené le sommet du pneumatique à une température de l'ordre de 50 à 60 degrés Celsius, on a inséré sur l'ensemble du sommet douze vis de diamètre 3,5 mm et de longueur 30 mm et douze vis de diamètre 3,5 mm et de longueur 40 mm. Les objets perforants sont régulièrement répartis sur la circonférence du sommet.

On fixe ensuite l'ensemble pneumatique et roue gonflé sur le moyeu d'une rouleuse présentant un développement de cinq à six mètres.

Les conditions de roulage sont les suivantes : la pression de gonflage est régulée, par exemple à 2,5 bars, la charge appliquée est de l'ordre de 70 % de la capacité de charge du pneumatique, la température dans l'enceinte de la rouleuse est régulée à environ 20°C et le roulage est un roulage droit, sans couple ni dérive ni carrossage appliqués.

Les conditions de vitesses dépendent du protocole :
- pour le protocole clous, le roulage est de six heures à V₁ = 100 km/h ; à cette vitesse, on n'observe pratiquement pas d'éjection de clous ;
   pour le protocole vis, un 1^{er} roulage est effectué pendant six heures à une vitesse V₂ = 70 km/h ; puis, après avoir analysé les résultats du premier roulage, un second roulage est effectué pendant six heures à une vitesse V₂₋₂ = 130 km/h ;
- pour la troisième phase ou « protocole bouchons », le roulage est de six heures à 150km/h.

Il est possible que les clous les plus gros soient éjectés pendant le roulage. Les conditions analytiques du test (clou neuf, non rouillé, planté droit) favorisent l'apparition d'éjection. Dans ce cas, le clou éjecté n'est pas pris en compte dans le calcul des notes finales. Les vis ne sont pas non plus expulsées pendant le roulage, le filetage augmente l'effort nécessaire pour les extraire.

Après le roulage, une phase de refroidissement de deux heures au minimum est respectée.

L'analyse des résultats est effectuée demi-sommet par demi-sommet.

Le résultat du test est une observation qualitative des fuites de chaque perforation, avant extraction, après extraction et environ 10 mn après l'extraction.

Les fuites sont évaluées avec l'aide d'un agent tensio-actif, par exemple une bombe aérosol de la marque « 1000 bulles ». Le produit est projeté sur la perforation et l'observateur note la présence, la taille et le nombre des bulles avec l'aide d'une loupe et sous un fort éclairage.

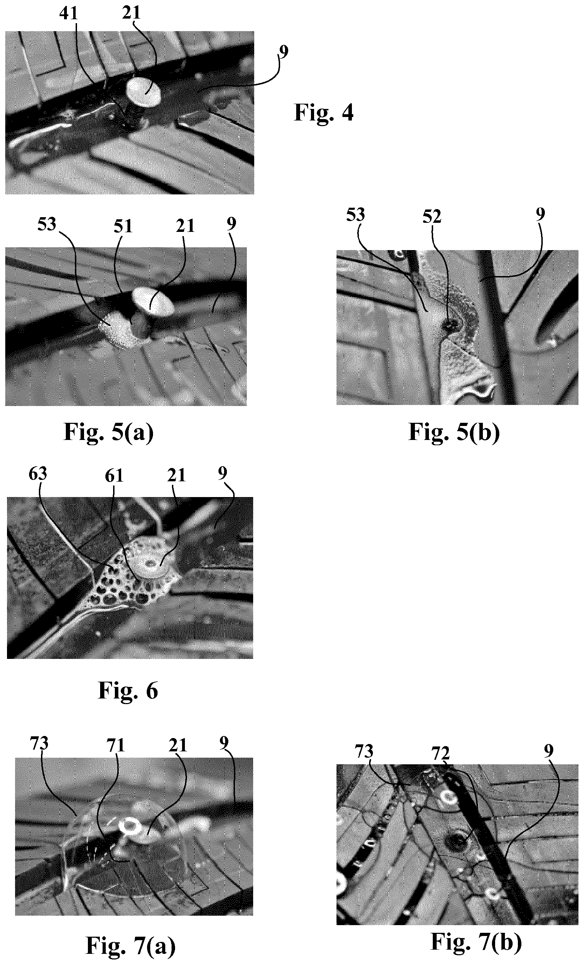

Les figures 4 à 7 illustrent les différents cas observés avec les objets perforants en place (Fig. 4, 5(a), 6 et 7(a)) et après son extraction ou éjection (Fig. 5(b), 7(b)).

A la fig. 4, on voit un clou 21 traversant une perforation 41 disposée dans le sillon longitudinal 9 du pneumatique. On ne voit aucune bulle, il n'y a pas de fuite, la perforation est notée 10 ou 100%.

A la figure 5(a), on voit un objet perforant 21 traversant une perforation 51 disposée dans le sillon longitudinal 9 du pneumatique. L'application du produit tensio-actif permet de visualiser un grand nombre de très très petites bulles 51, seulement visibles à la loupe et de diamètre inférieur à 0,1 mm. Il s'agit d'une très faible fuite, notée 8 ou 80%.

A la figure 5(b), on voit une perforation 52 faite par un objet perforant qui a été expulsé ou extrait. La perforation 52 est aussi située dans le sillon longitudinal extérieur 9 du pneumatique. L'application de produit tensio-actif permet aussi de visualiser un grand nombre de très très petites bulles 51, visibles à la loupe et de diamètre inférieur à 0,1 mm. On donne la même notation 8 ou 80%.

A la figure 6, on voit un objet perforant 21 traversant une perforation 61 disposée dans le sillon longitudinal extérieur 9 du pneumatique. Là l'application du produit tensio-actif permet de visualiser un ensemble de petites bulles 63 de diamètre sensiblement compris entre 0,1 mm et 1 mm. Il s'agit d'une faible fuite notée 6 ou 60%.

A la figure 7(a), on voit un objet perforant 21 traversant une perforation 71 disposée toujours dans un sillon longitudinal du pneumatique. L'application du produit tensio-actif permet de visualiser une seule grosse bulle 73 de diamètre supérieur à 1 mm. On est en présence d'une fuite notée 0 ou 0%.

A la figure 7(b), on voit dans le sillon longitudinal du pneumatique une perforation 72 dons l'objet perforant a été expulsé pendant le roulage ou extrait après l'arrêt. De la même manière, on ne voit qu'une seule grosse bulle 73 de diamètre supérieur à 1 mm. Il s'agit d'une fuite notée 0 ou 0%.

Les tableaux suivants présentent les résultats du protocole clous.

**Tableau 1 : protocole clous - notes avant roulage**

| | **Notes avant roulage** | | | | | | | | | | | |
|---|---|---|---|---|---|---|---|---|---|---|---|---|
| | **Ø 3 mm** | | | **Ø 4 mm** | | | **Ø 5 mm** | | | **Ø 3 mm** | | |
| **Positions** | **SC** | **SE** | **CT** | **SC** | **SE** | **CT** | **SC** | **SE** | **CT** | **SC** | **SE** | **CT** |
| **Notes** | **10** | **10** | **10** | **10** | **10** | **10** | **10** | **10** | **10** | **10** | **10** | **10** |

| | | | | | | | | | | | | |
|---|---|---|---|---|---|---|---|---|---|---|---|---|
| Avec : - SE : clou placé dans le sillon extérieur 9 ; - SC : clou placé dans le sillon central 7 ; et - CT : clou placé dans un creux transversal 11. | | | | | | | | | | | | |

Aucune fuite n'est observée pour les 12 clous incorporés dans la moitié du bloc sommet du pneumatique 1, la performance est de 100 %.

**Tableau 2 : protocole clous - notes après roulage**

| | **Clous en place après roulage** | | | | | | | | | | | |
|---|---|---|---|---|---|---|---|---|---|---|---|---|
| | **Ø 3 mm** | | | **Ø 4 mm** | | | **Ø 5 mm** | | | **Ø 3 mm** | | |
| **Positions** | **SC** | **SE** | **CT** | **SC** | **SE** | **CT** | **SC** | **SE** | **CT** | **SC** | **SE** | **CT** |
| **Notes** | **10** | **10** | **10** | **10** | **8** | **6** | **10** | **6** | **6** | **10** | **10** | **8** |

Après six heures de roulage à 100 km/h, on constate qu'aucun des douze clous n'a été éjecté. Une très faible fuite est observée pour un clou de diamètre 3 mm ; une faible fuite notée 6 et une très faible fuite notée 8 pour les clous de diamètre 4 mm et deux faibles fuites notées 6 pour les clous de diamètre 5 mm.

La performance diminue ainsi de 97 % pour les clous de diamètre 3 mm à 80 % pour ceux de diamètre 4 mm et 73 % pour ceux de diamètre 5 mm.

**Tableau 3 : protocole clou - notes après extraction**

| | **Contrôle après roulage et extraction des clous** | | | | | | | | | | | |
|---|---|---|---|---|---|---|---|---|---|---|---|---|
| | **Ø 3 mm** | | | **Ø 4 mm** | | | **Ø 5 mm** | | | **Ø 3 mm** | | |
| **Positions** | **SC** | **SE** | **CT** | **SC** | **SE** | **CT** | **SC** | **SE** | **CT** | **SC** | **SE** | **CT** |
| **Notes à T0** | **10** | **8** | **8** | **8** | **8** | **8** | **8** | **8** | **8** | **10** | **8** | **10** |
| **Notes à T10** | **10** | **8** | **8** | **10** | **8** | **8** | **10** | **8** | **10** | **10** | **8** | **10** |

Le tableau 3 ci-dessus présente les résultats observés à l'issue de l'arrachement des clous. Deux phases de notations sont effectuées : immédiatement après arrachement (T0) et 10 minutes plus tard (T10). On remarque que certaines notes peuvent évoluer entre T0 et T10. Les résultats sont bons entre 80 et 90%.

Une note globale « clous en place» peut être calculée à partir des résultats du tableau 2, en pondérant les différents diamètres de clous avec une courbe de fréquence d'apparition des clous en clientèle. De même, une note globale « clous arrachés » peut être calculée à partir des résultats du tableau 3.

Les tableaux suivants présentent les résultats du test vis.

**Tableau 4 - protocole vis - notes avant roulage**

| | **longueur 40** | | | **longueur 40** | | | **longueur 40** | | | **longueur 40** | | |
|---|---|---|---|---|---|---|---|---|---|---|---|---|
| **Positions** | **SC** | **SE** | **CT** | **SC** | **SE** | **CT** | **SC** | **SE** | **CT** | **SC** | **SE** | **CT** |
| **Pneu chaud** | **0** | **0** | **6** | **6** | **0** | **0** | **0** | **0** | **0** | **6** | **6** | **6** |
| **Pneu froid** | **0** | **0** | **6** | **6** | **0** | **0** | **0** | **0** | **6** | **6** | **6** | **6** |

Le tableau 4 ci-dessus présente les résultats observés lors de la mise en place des vis de longueur 40mm dans le sommet du pneumatique. Douze vis ont été insérées sur un ½ pneu. Des notations à chaud sont effectuées (ligne « pneu chaud ») puis après refroidissement du pneumatique (ligne « pneu froid »). On note que l'insertion des vis entraîne dans cet exemple l'apparition systématique de fuites plus ou moins importantes. L'indice de performance est de 25 % pneu chaud et de 30 % après refroidissement du pneumatique. Tout ou partie de ces fuites disparaitront pendant le roulage.

**Tableau 5 : protocole vis - notes après roulage à 70 km/h**

| | **Notes après roulage** | | | | | | | | | | | |
|---|---|---|---|---|---|---|---|---|---|---|---|---|
| | **longueur 40** | | | **longueur 40** | | | **longueur 40** | | | **longueur 40** | | |
| **Positions** | **SC** | **SE** | **CT** | **SC** | **SE** | **CT** | **SC** | **SE** | **CT** | **SC** | **SE** | **CT** |
| **roulage 70 km/h** | **0** | **0** | **6** | **8** | **0** | **0** | **0** | **0** | **0** | **10** | **8** | **6** |

Le tableau 5 présente les résultats observés à l'issue du premier roulage du protocole vis à 70 km/h. L'indice obtenu est très proche des deux précédents avant le roulage : 32 %.

**Tableau 6 : protocole vis - notes après roulage à 130 km/h**

| | **Notes après roulage** | | | | | | | | | | | |
|---|---|---|---|---|---|---|---|---|---|---|---|---|
| | **longueur 40** | | | **longueur 40** | | | **longueur 40** | | | **longueur 40** | | |
| **Positions** | **SC** | **SE** | **CT** | **SC** | **SE** | **CT** | **SC** | **SE** | **CT** | **SC** | **SE** | **CT** |
| **roulage 130** | **8** | **0** | **8** | **10** | **0** | **10** | **10** | **0** | **6** | **10** | **0** | **10** |
| **arrachage T0** | **8** | **8** | **8** | **8** | **6** | **8** | **6** | **6** | **10** | **0** | **8** | **10** |
| **arrachage T10** | **8** | **10** | **10** | **8** | **10** | **10** | **6** | **8** | **10** | **10** | **8** | **10** |

Le tableau 6 ci-dessus présente les résultats observés à l'issue du second roulage à 130 km/h. On remarque sur ce cas que les notes ont sensiblement augmenté entre le 1^{er} et le second roulage avec les vis en place : I_{M} = 60 %.

Le tableau 6présente aussi les résultats observés à l'issue de l'arrachement des vis. Comme pour les clous, deux phases de notations sont effectuées : immédiatement après arrachement (T0) et 10 minutes plus tard (T10). Les notes obtenues après arrachement des vis sont de 72 % pour T0 et de 90 % pour T10.

Les tableaux suivants présentent les résultats du test bouchons

**Tableau 7 : protocole bouchons - notes après mise en place et arrachement**

| | **Notes avant roulage** | | | | | | | | | | | |
|---|---|---|---|---|---|---|---|---|---|---|---|---|
| | **Ø 5 mm** | | | **Ø 5 mm** | | | **Ø 5 mm** | | | **Ø 4 mm** | | |
| **Positions** | **SC** | **SE** | **CT** | **SC** | **SE** | **CT** | **SC** | **SE** | **CT** | **SC** | **SE** | **CT** |
| **mèche ?** | | | | | | | | | | | | |
| **Après arrachement** | **10** | **10** | **10** | **10** | **10** | **10** | **10** | **10** | **10** | **10** | **10** | **10** |

Le tableau 7 ci-dessus présente les résultats observés après les phases de mise en place et arrachement des clous. Si une note est de 0, le trou est méché et une nouvelle insertion est effectuée un peu plus loin sur le sommet du pneumatique.

**Tableau 8 : protocole bouchons - notes après roulage à 150 km/h**

| | **Notes après roulage** | | | | | | | | | | | |
|---|---|---|---|---|---|---|---|---|---|---|---|---|
| | **Ø 5 mm** | | | **Ø 5 mm** | | | **Ø 5 mm** | | | **Ø 4 mm** | | |
| **Positions** | **SC** | **SE** | **CT** | **SC** | **SE** | **CT** | **SC** | **SE** | **CT** | **SC** | **SE** | **CT** |
| **T0** | **10** | **10** | **10** | **10** | **10** | **0** | **10** | **10** | **10** | **10** | **10** | **10** |
| **T10** | **10** | **10** | **10** | **10** | **10** | **0** | **10** | **10** | **10** | **10** | **10** | **10** |

Ce sont principalement des clous de diamètre 5mm qui sont utilisés : on souhaite révéler les éventuelles faiblesses du produit testé sur les cas les plus défavorables.

Le tableau 8 ci-dessus présente les résultats observés à l'issue du roulage. Deux phases de notations sont effectuées : immédiatement après arrachement (T0) et 10 minutes plus tard (T10). On remarque que la majorité des notes sont à 10.

Le test décrit concernait un pneumatique équipé lors de sa fabrication d'une couche de produit auto-obturant. Comme il a déjà été indiqué, le test décrit permet aussi de tester les autres solutions telles les bombes anti-crevaison et les kits de réparation.

Des essais ont été réalisés avec ces autres solutions. On constate que les performances d'obturation sont pratiquement de 100% pour toutes les solutions lors d'une crevaison avec retrait instantané de l'objet perforant. En revanche, lors d'un roulage avec objet perforant en place, dès 200 à 300 km de roulage, la performance des bombes anti-crevaison devient nulle, le produit sort par les perforations. En ce qui concerne les kits de réparation, leurs performances sont meilleures mais diminuent très fortement aussi avec la longueur du roulage effectué avec les objets perforants en place.

Le test ainsi décrit a l'avantage d'être très sélectif et d'être basé sur l'analyse des débits de fuite de chaque perforation et non sur une perte de pression ce qui permet d'obtenir de nombreux résultats avec un seul pneumatique.

## Revendications

1. Méthode de test de la résistance d'un pneumatique à une perte de pression consécutive à une perforation, **caractérisée en ce qu'**elle comporte les étapes suivantes :
- créer dans la paroi dudit pneumatique une pluralité de perforations en insérant à travers ladite paroi une pluralité d'objets perforants ;
- faire rouler le pneumatique comportant les objets perforants sur une distance donnée avec une pression de gonflage régulée ;
- arrêter le roulage ; et
- déterminer pour chaque perforation un indice de résistance à la perte de pression basé sur une estimation du débit de fuite de ladite perforation ;
et **en ce que** :
- dans une première phase, la pluralité d'objets perforants se compose d'objets effilés et à parois lisses tels des clous et le roulage est effectué de telle sorte que les objets ne sont pas éjectés pendant le roulage ; et
- dans une deuxième phase, la pluralité d'objets perforants se compose d'objets effilés mais à parois comportant un filet tels des vis et le roulage est effectué à des vitesses inférieures à 80 km/h.

2. Méthode de test selon la revendication 1, dans laquelle l'insertion des objets perforants de la deuxième phase est réalisée lorsque le pneumatique est à une température de l'ordre de 50 à 60 degrés Celsius.

3. Méthode de test selon l'une des revendications 1 et 2, dans laquelle le roulage de la première phase est effectué à une vitesse V₁ fixe comprise entre 90 et 120 km/h.

4. Méthode de test selon l'une des revendications 1 à 3, dans laquelle le roulage de la seconde phase est effectué à une vitesse fixe V₂ comprise entre 50 et 75 km/h.

5. Méthode de test selon l'une quelconque des revendications précédentes, dans laquelle la deuxième phase comporte en plus un deuxième test à une vitesse V₂₋₂ fixe supérieure à 80 km/h.

6. Méthode de test selon l'une quelconque des revendications précédentes, comportant en outre une troisième phase avec les étapes suivantes :
- créer dans la paroi dudit pneumatique une pluralité de perforations en insérant à travers ladite paroi une pluralité d'objets perforants ;
- extraire de la paroi dudit pneumatique la pluralité d'objets perforants ;
- faire rouler le pneumatique après extraction des objets perforants à une vitesse V₃ supérieure à 120 km/h sur une distance donnée avec une pression de gonflage régulée ;
- arrêter le roulage ; et
- déterminer pour chaque perforation un indice de résistance à la perte de pression basé sur une estimation du débit de fuite de ladite perforation.

7. Méthode de test selon la revendication 6, dans laquelle la vitesse V₃ est fixe et inférieure à 180 km/h.

8. Méthode de test selon l'une quelconque des revendications précédentes, dans laquelle, le pneumatique ne comportant pas de produit auto-obturant, à l'arrêt du roulage et avant de déterminer les indices de résistance à la perte de pression, on met en place dans la cavité interne du pneumatique un produit d'obturation.

9. Méthode de test selon l'une quelconque des revendications 1 à 8, comportant l'étape complémentaire suivante :
- calculer pour chaque phase un indice de résistance à la perte de pression moyen (I_{M1}, I_{M2}, I_{M3}) pour l'ensemble des perforations.

10. Méthode de test selon l'une quelconque des revendications 1 à 8, comportant l'étape complémentaire suivante :
- calculer pour chaque phase un indice de résistance à la perte de pression (I_{M1}, I_{M2}, I_{M3}) pour l'ensemble des perforations calculé en combinant les notations de chaque objet perforant et en les pondérant avec une courbe de fréquence d'apparition desdits objets en clientèle.

11. Méthode selon l'une quelconque des revendications précédentes, dans laquelle la distance de roulage du pneumatique comportant une pluralité de perforations à travers sa paroi est supérieure à 200 km et de préférence supérieure à 500 km.

12. Méthode selon l'une quelconque des revendications précédentes, dans laquelle le roulage dudit pneumatique est effectué sur un volant.

13. Méthode selon l'une quelconque des revendications précédentes, dans laquelle le pneumatique est gonflé avant d'insérer la pluralité d'objets perforants à travers la paroi dudit pneumatique.

14. Méthode selon l'une quelconque des revendications précédentes, dans laquelle la pression de gonflage pendant le roulage est régulée à une pression comprise entre 1,8 et 5 bars selon le type de pneumatiques.

15. Méthode selon l'une quelconque des revendications précédentes, dans laquelle la pluralité d'objets perforants comprend des vis et des clous de diamètres et/ou longueurs variés.

## Patentansprüche

1. Verfahren zum Testen der Beständigkeit eines Reifens gegen einen Druckverlust nach einer Perforation, **dadurch gekennzeichnet, dass** es die folgenden Schritte aufweist:
- Erzeugen von mehreren Perforationen in der Wand des Reifens durch Einfügen von mehreren perforierenden Gegenständen durch die Wand,
- Rollen des Reifens, der die perforierenden Gegenstände aufweist, über eine festgelegte Entfernung mit einem regulierten Reifendruck,
- Stoppen des Rollens und
- Bestimmen eines Druckverlustwiderstandsindex für jede Perforation basierend auf einer Schätzung der Leckrate der Perforation
und dadurch, dass:
- die mehreren perforierenden Gegenstände in einer ersten Phase aus zugespitzten Gegenständen mit glatten Wänden, wie Nägeln, bestehen und das Rollen derart ausgeführt wird, dass die Gegenstände während des Rollens nicht ausgeworfen werden und
- die mehreren perforierenden Gegenstände in einer zweiten Phase aus zugespitzten Gegenständen, aber mit Wänden, die ein Gewinde aufweisen, wie Schrauben, bestehen und das Rollen bei Geschwindigkeiten unter 80 km/h durchgeführt wird.

2. Verfahren zum Testen nach Anspruch 1, wobei das Einfügen der perforierenden Gegenstände der zweiten Phase durchgeführt wird, wenn der Reifen bei einer Temperatur der Größenordnung von 50 bis 60 Grad Celsius ist.

3. Verfahren zum Testen nach einem der Ansprüche 1 bis 2, wobei das Rollen der ersten Phase bei einer festen Geschwindigkeit V₁ zwischen 90 und 120 km/h durchgeführt wird.

4. Verfahren zum Testen nach einem der Ansprüche 1 bis 3, wobei das Rollen der zweiten Phase bei einer festen Geschwindigkeit V₂ zwischen 50 und 75 km/h durchgeführt wird.

5. Verfahren zum Testen nach einem der vorhergehenden Ansprüche, wobei die zweite Phase ferner einen zweiten Test bei einer festen Geschwindigkeit V₂₋₂ von über 80 km/h aufweist.

6. Verfahren zum Testen nach einem der vorhergehenden Ansprüche, ferner umfassend eine dritte Phase mit den folgenden Schritten:
- Erzeugen von mehreren Perforationen in der Wand des Reifens durch Einfügen von mehreren perforierenden Gegenständen durch die Wand,
- Herausziehen der mehreren perforierenden Gegenstände aus der Wand des Reifens,
- Rollen des Reifens nach dem Herausziehen der perforierenden Gegenstände bei einer Geschwindigkeit V₃ von über 120 km/h über eine festgelegte Entfernung mit einem regulierten Reifendruck,
- Stoppen des Rollens und
- Bestimmen eines Druckverlustwiderstandsindex für jede Perforation basierend auf einer Schätzung der Leckrate der Perforation.

7. Verfahren zum Testen nach Anspruch 6, wobei die Geschwindigkeit V₃ fest und niedriger als 180 km/h ist.

8. Verfahren zum Testen nach einem der vorhergehenden Ansprüche, wobei, nachdem der Reifen kein selbstdichtendes Produkt aufweist, beim Anhalten des Rollens und vor dem Bestimmen der Druckverlustwiderstandsindexe ein Dichtmittel in den inneren Hohlraum des Reifens eingebracht wird.

9. Verfahren zum Testen nach einem der Ansprüche 1 bis 8, umfassend den folgenden zusätzlichen Schritt:
- Berechnen eines Druckverlustwiderstandsindex (I_{M1}, I_{M2}, I_{M3}) für jede Phase für alle Perforationen.

10. Verfahren zum Testen nach einem der Ansprüche 1 bis 8, umfassend den folgenden zusätzlichen Schritt:
- Berechnen eines Druckverlustwiderstandsindex (I_{M1}, I_{M2}, I_{M3}) für jede Phase für alle Perforationen, der durch Kombinieren der Bewertungen jedes perforierenden Gegenstands und durch deren Gewichten mit einer Kurve der Häufigkeit des Auftretens der Gegenstände bei den Kunden berechnet wird.

11. Verfahren nach einem der vorhergehenden Ansprüche, wobei die Entfernung des Rollens des Reifens, der mehrere Perforationen durch seine Wand aufweist, größer als 200 km und vorzugsweise größer als 500 km ist.

12. Verfahren nach einem der vorhergehenden Ansprüche, wobei das Rollen des Reifens auf einem Rad durchgeführt wird.

13. Verfahren nach einem der vorhergehenden Ansprüche, wobei der Reifen aufgepumpt wird, bevor die mehreren perforierenden Gegenstände durch die Wand des Reifens eingeführt werden.

14. Verfahren nach einem der vorhergehenden Ansprüche, wobei der Reifendruck bei dem Rollen auf einen Druck reguliert wird, der zwischen 1,8 und 5 bar je nach Reifentyp beträgt.

15. Verfahren nach einem der vorhergehenden Ansprüche, wobei die mehreren perforierenden Gegenstände Schrauben und Nägel von verschiedenen Durchmessern und/oder Längen aufweisen.

## Claims

1. Method for testing the resistance of a tyre to a loss in pressure following a puncture, **characterized in that** it comprises the following steps:
- creating a plurality of punctures in the wall of the said tyre by inserting a plurality of puncturing objects through the said wall;
- running the tyre with the puncturing objects in it over a given distance with a regulated inflation pressure;
- stopping running; and
- determining, for each puncture, a pressure loss resistance index based on an estimate of the leak rate of the said puncture;
and **in that**:
- in a first phase, the plurality of puncturing objects is made up of pointed smooth-walled objects such as nails and running is performed in such a way that the objects are not ejected during running; and
- in a second phase, the plurality of puncturing objects is made up of objects that are pointed but have walls bearing a screw thread, such as screws, and running is performed at speeds of below 80 km/h.

2. Test method according to Claim 1, in which the insertion of the puncturing objects in the second phase is performed when the tyre is at a temperature of the order of 50 to 60 degrees Celsius.

3. Test method according to one of Claims 1 and 2, in which the running in the first phase is performed at a fixed speed V₁ of between 90 and 120 km/h.

4. Test method according to one of Claims 1 to 3, in which the running in the second phase is performed at a fixed speed V₂ of between 50 and 75 km/h.

5. Test method according to any one of the preceding claims, in which the second phase additionally comprises a second test at a fixed speed V₂₋₂ greater than 80 km/h.

6. Test method according to any one of the preceding claims, further comprising a third phase with the following steps:
- creating a plurality of punctures in the wall of the said tyre by inserting a plurality of puncturing objects through the said wall;
- extracting the plurality of puncturing objects from the wall of the said tyre;
- running the tyre after the puncturing objects have been extracted at a speed V₃ greater than 120 km/h over a given distance with a regulated inflation pressure;
- stopping running; and
- determining, for each puncture, a pressure loss resistance index based on an estimate of the leak rate of the said puncture.

7. Test method according to Claim 6, in which the speed V₃ is fixed and less than 180 km/h.

8. Test method according to any one of the preceding claims, in which, when the tyre does not comprise any self-sealing product, upon stopping running and prior to determining the pressure loss resistance indices, a sealing product is placed in the internal cavity of the tyre.

9. Test method according to any one of Claims 1 to 8, comprising the following additional step:
- for each phase, calculating a mean pressure loss resistance index (I_{M1}, I_{M2}, I_{M3}) for all the punctures.

10. Test method according to any one of Claims 1 to 8, comprising the following additional step:
- for each phase, calculating a pressure loss resistance index (I_{M1}, I_{M2}, I_{M3}) for all of the punctures which is calculated by combining the scores for each puncturing object and weighting these scores using a curve that indicates the frequency at which the said objects appear within the customer base.

11. Method according to any one of the preceding claims, in which the distance for which the tyre comprising a plurality of punctures through its wall is run is greater than 200 km and preferably greater than 500 km.

12. Method according to any one of the preceding claims, in which the said tyre is run on a rolling road.

13. Method according to any one of the preceding claims, in which the tyre is inflated before the plurality of puncturing objects is inserted through the wall of the said tyre.

14. Method according to any one of the preceding claims, in which the inflation pressure during running is regulated to a pressure comprised between 1.8 and 5 bar according to the type of tyre.

15. Method according to any one of the preceding claims, in which the plurality of puncturing objects comprises screws and nails of varying diameters and/or varying lengths.
